(19) **Europäisches Patentamt**

**European Patent Office**

**Office européen des brevets**

(11) **EP 1 207 192 B1**

(12) **EUROPEAN PATENT SPECIFICATION**

(45) Date of publication and mention
of the grant of the patent:
**23.03.2005 Bulletin 2005/12**

(51) Int Cl.[7]: **C10J 3/16**, C10J 3/20,
C10J 3/72, F23G 5/027

(21) Application number: **01126578.2**

(22) Date of filing: **14.07.1995**

(54) **Fixed-bed gasification furnaces and methods for gasifying organic waste**

Festbettvergaser und Verfahren zur Vergasung von organischen Abfällen

Gazéificateurs à lit fixe et méthodes de gazéification de déchets organiques

(84) Designated Contracting States:
**BE DE ES FR GB IT NL**

(30) Priority: **01.12.1994 JP 29818994**
**27.01.1995 JP 1119195**

(43) Date of publication of application:
**22.05.2002 Bulletin 2002/21**

(60) Divisional application:
**04013048.6 / 1 462 505**

(62) Document number(s) of the earlier application(s) in
accordance with Art. 76 EPC:
**95111105.3 / 0 693 539**

(73) Proprietor: **MITSUBISHI JUKOGYO KABUSHIKI**
**KAISHA**
**Tokyo 100 (JP)**

(72) Inventors:
• **Arima, Kenichi, Nagasaki R&D Center**
**Nagasaki-shi, Nagasaki-ken (JP)**

• **Soda, Masahiro, Nagasaki R&D Center**
**Nagasaki-shi, Nagasaki-ken (JP)**
• **Yamamoto, Hisao**
**Nagasaki-shi, Nagasaki-ken (JP)**
• **Sakai, Masayasu**
**Nagasaki-shi, Nagasaki-ken (JP)**
• **Ohta, Hideaki, Nagasaki R&D Center**
**Nagasaki-shi, Nagasaki-ken (JP)**
• **Fujioka, Yuichi, Nagasaki R&D Center**
**Nagasaki-shi, Nagasaki-ken (JP)**

(74) Representative: **Behrens, Dieter, Dr.-Ing.**
**Wuesthoff & Wuesthoff**
**Patent- und Rechtsanwälte**
**Schweigerstrasse 2**
**81541 München (DE)**

(56) References cited:
**EP-A- 0 297 425       US-A- 4 321 877**
**US-A- 5 094 669**

## Description

BACKGROUND OF THE INVENTION

1. Field of the Invention

The present invention generally relates to the combustion of organic waste and, more specifically, to fixed-bed gasification furnaces for gasifying organic waste such as scrap tires and waste plastics, and to methods for gasifying such organic waste by using such furnaces.

2. Description of the Related Art

Conventionally, organic waste such as scrap tires and waste plastics has been directly incinerated only for the purpose of generating steam by means of a heat exchanger and utilizing the steam as a heat source. Thus, such organic waste has not practically been used as an ingredient or resource for other products.

When scrap tires are taken as an example of organic waste, they are composed of 50-60 % of volatiles, 20-30 % of fixed carbon, and 10-15 % of inorganic matter such as steel and ash, as shown in Table 1. Since scrap tires include steel wires, it is difficult to crush them into small pieces. Accordingly, it has been conventional practice to burn whole scrap tires in a stoker or kiln or to crush scrap tires to about 10 cm cubes and burn them in a stoker or kiln. However, these combustion methods involve the following problems:

> (1) If scrap tires are burned with the aid of air, volatiles present therein decompose and burn rapidly. As a result, a high temperature of 1,500°C or above is attained locally, tending to cause damage to the furnace. Moreover, large amounts of soot and tar are produced from the flame, requiring after-treatment.
> (2) The fixed carbon remaining after the evaporation of volatiles has such a low burning rate that it may form a residue in admixture with inorganic matter. This residue is not easy to dispose of.
> (3) On the other hand, if scrap tires are burned with a gaseous mixture of air and combustion exhaust gas, the problem described in the above paragraph (1) is alleviated. However, the problem described in the above paragraph (2) is aggravated owing to an increase in residual fixed carbon. Thus, it is impossible to have an overall solution.

For these reasons, it is difficult to dispose of organic waste such as scrap tires. In the present state of the art, it has been impossible to reclaim resources from such waste.

Table 1:

| Composition of tires | | |
| --- | --- | --- |
| Component | | Content (%) |
| Volatiles | Raw rubber | 40-50 |
| | Oil | 5-10 |
| Fixed carbon | | 20-30 |
| Steel & ash | | 10-15 |

With respect to the present invention, an example of a conventional fixed-bed gasification furnace for gasifying organic waste such as scrap tires and waste plastics is illustrated in Fig. 4. In the fixed-bed gasification furnace 201 of Fig. 4, volatiles present in organic waste 206 fed from above are pyrolyzed and gasified by the heat evolved as a result of the partial combustion of fixed carbon present in the underlying residue, thus yielding a residue 207 consisting largely of fixed carbon. The fixed carbon present in residue 207 is partially burned and gasified with a gasifying agent 211 which is a mixture of an oxygen-containing gas and steam and which is supplied to a space below a perforated plate 204 through a valve 212, and the fixed carbon serves to supply the heat required to pyrolyze the volatiles. The gas produced by the pyrolysis and gasification of volatiles and the gas produced by the gasification of fixed carbon are mixed together and withdrawn as an organic waste-gasified gas 210. The reactions occurring during this process are represented by the following equations (1), (2) and (3).

$$C + O_2 \text{ ---> } CO + CO_2 + Q_1 \text{ (exothermic)} \qquad (1)$$

(Supply of the heat of reaction by the partial combustion and gasification of fixed carbon)

$$C + H_2O \text{ ---> } CO + H_2 - Q_3 \text{ (endothermic)} \qquad (2)$$

(Gasification by the reaction of fixed carbon with steam)

$$C_nH_m \text{ ---> } C_{n1}H_{m1} - Q_2 \text{ (endothermic)}$$

$$(n > n1, m > m1) \qquad (3)$$

(Pyrolysis and gasification of volatiles)

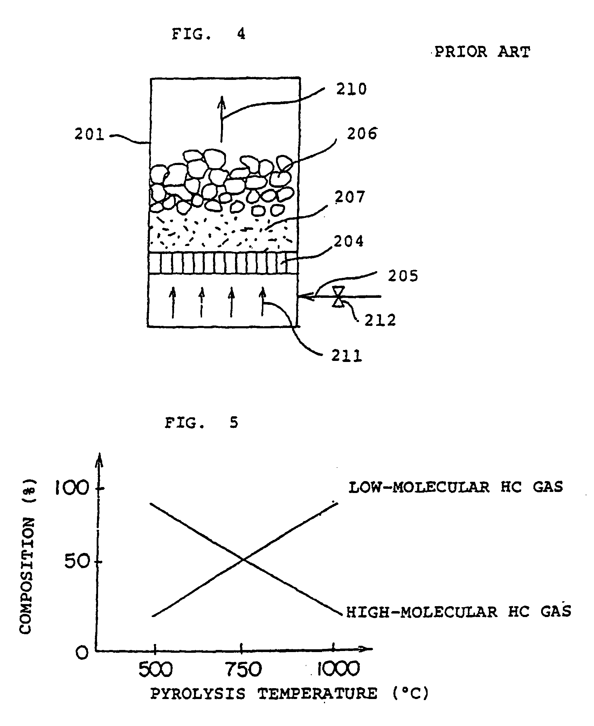

If the pyrolysis temperature of volatiles is high (e.g., 700°C or above), C-C bonds are severed extensively, so that a low-molecular hydrocarbon gas consisting of low-molecular components such as methane ($CH_4$), ethane ($C_2H_6$) and ethylene ($C_2H_4$) are produced in high proportions. On the other hand, if the pyrolysis temperature is low (e.g., 500-700°C), a high-molecular hydrocarbon gas containing aromatic compounds such as benzene ($C_6H_6$), toluene ($C_7H_8$) and naphthalene ($C_{10}H_8$) is produced. This situation is schematically shown in Fig. 5.

When a gas obtained by the gasification of organic waste is used as the raw material for the formation of carbon black, the gas produced in the gasification furnace is introduced into a combustion furnace for the formation of carbon black, and burned in a low-oxygen environment to form carbon black. During this process, a gas consisting of low-molecular components is predominantly burned by reaction with oxygen, creating a high-temperature field. In this high-temperature field, a high-molecular hydrocarbon gas undergoes dehydrogenation and polycondensation repeatedly and thereby grows to form carbon black. That is, in order to enhance the yield of carbon black, it is preferable to increase the content of high-molecular components, such as naphthalene ($C_{10}H_8$) and anthracene ($C_{14}H_{10}$), in the gas obtained by the gasification of organic waste. To this end, it is preferable to carry out the pyrolysis of volatiles at a temperature of 500-700°C.

If the pyrolysis temperature is higher than 700°C, C-C bonds present in volatiles will be severed extensively to produce low-molecular hydrocarbons, such as methane ($CH_4$), ethane ($C_2H_6$) and ethylene ($C_2H_4$). If it is lower than 500°C, the pyrolysis will not proceed satisfactorily.

Usually, the quantity of heat required to pyrolyze and gasify volatiles at a temperature of 500-700°C will be only about 5-10 of the total quantity of heat possessed by organic waste. Where the content of fixed carbon in organic waste is high (e.g., 20 %), the combustion of all fixed carbon will evolve an excessive quantity of heat.

Thus, where it is desired to produce a high-molecular hydrocarbon gas from volatiles in the gasification of organic waste, the following problems arise. They make it difficult to control the pyrolysis temperature of volatiles so as to remain in an appropriate range.

(1) If the feed rate of oxygen is reduced to decrease the amount of fixed carbon undergoing partial combustion (i.e., the heat of combustion, $Q_1$, of fixed carbon) and thereby lower the pyrolysis temperature, a residue containing fixed carbon is left. This residue is not easy to dispose of.

(2) Contrary, if fixed carbon is partially burned at a sufficiently high feed rate of oxygen so as not to leave any residual fixed carbon, the heat of combustion is increased to raise the pyrolysis temperature. As a result, a high-molecular hydrocarbon gas cannot be obtained.

(3) The reaction temperature can be lowered by adding steam to the gasifying agent. However, if the feed rate of steam is raised to increase the quantity of heat ($Q_3$) absorbed by the reaction of fixed carbon with steam, fixed carbon and unreacted steam react with the high-molecular hydrocarbon gas produced by the pyrolysis of volatiles, resulting in the formation of low-molecular hydrocarbons.

$$C_{n1}H_{m1} + H_2O \text{---}> C_{n2}H_{m2} + CO + H_2 - Q_4$$

$$(n1 > n2, m1 > m2) \tag{4}$$

Furthermore, as noted above, a proper temperature control is required to obtain a gas having a composition suitable for use as the raw material for the production of carbon black. In conventional fixed-bed gasification furnaces, the feed rate of the whole gasifying agent is usually controlled in response to the height of the organic waste layer within the furnace and this involves the following problems.

If the feed rate of organic waste varies, the resulting change in the feed rate of the gasifying agent is delayed because of the time lag of the change in the height of the organic waste layer. This causes the gasifying agent/organic waste ratio to become unbalanced. As a result, the supply of heat by the partial combustion and gasification of fixed carbon according to the above equations (1) and (2) also becomes unbalanced, so that the internal temperature of the gasification furnace may be fluctuated. Thus, the pyrolysis temperature of volatiles depending on equation (3) may be fluctuated to depart from its appropriate range. That is, if the feed rate of organic waste decreases, the gasifying agent/organic waste ratio temporarily becomes unduly high, resulting a rise in pyrolysis temperature. Contrarily, if the feed rate of organic waste increases, the gasifying agent/organic waste ratio temporarily becomes unduly low, resulting a reduction in pyrolysis temperature. Consequently, the properties of the resulting organic waste- gasified gas are fluctuated, bringing about unstable operation of the succeeding process (such as carbon black production process) using that gas.

Also, in order to hold down the pyrolysis temperature of volatiles, the partial combustion/gasification temperature of fixed carbon needs to be held down. Since the reaction rate of fixed carbon is reduced thereby, the organic waste layer becomes thick, requiring a large-sized fixed-bed gasification furnace.

SUMMARY OF THE INVENTION

It is an object of the present invention to provide a fixed-bed gasification furnace which can lessen fluctuations in the internal temperature of the furnace and thereby maintain a stable pyrolysis temperature, as well as a method for gasifying organic waste by using such a furnace.

According to the present invention, there are provided:

(1) a fixed-bed gasification furnace wherein organic waste charged thereinto is gasified with supply of a gasifying agent comprising a mixture of an oxygen-containing gas and steam, said furnace comprising means for measuring the height of the layer of organic waste fed to said furnace, means for measuring the internal temperature of said furnace, a nozzle for supplying steam or nitrogen gas to a middle part of the organic waste layer, a controller for controlling the feed rate of the gasifying agent in response to a signal from said means for measuring the height of the organic waste layer, and a controller for controlling the feed rate of steam or nitrogen gas from said nozzle in response to a signal from said means for measuring the internal temperature of said furnace; and

(2) a method for gasifying organic waste by charging the organic waste into a fixed-bed gasification furnace and gasifying the organic waste with supply of a gasifying agent comprising a mixture of an oxygen-containing gas and steam, said method comprising the steps of: supplying steam or nitrogen gas to a middle part of the layer of organic waste fed to said furnace; controlling the feed rate of the gasifying agent in response to the height of the organic waste layer; and controlling the feed rate of steam or nitrogen gas supplied to a middle part of the organic waste layer in response to the internal temperature of said furnace, so as to carry out the gasification of the organic waste.

In this invention, the gasification temperature of volatiles in the volatiles pyrolysis region formed in the upper part of the organic waste layer within the furnace is controlled so as to be in the range of 500 to 700°C. If the temperature is lower than 500°C, the pyrolysis reaction will not proceed satisfactorily, while if it is higher than 700°C, the proportion of a high-molecular hydrocarbon gas will undesirably be reduced as stated before.

Moreover, the partial combustion/gasification temperature of fixed carbon in the fixed carbon partial combustion/gasification region formed in the lower part of the organic waste layer is preferably controlled so as to be in the range of 1,000 to 1,500°C. If the temperature is lower than 1,000°C, the reaction will be unduly slow, while if it is higher than 1,500°C, it will become difficult to control the gasification temperature of volatiles so as to be in the range of 500 to 700°C.

In order to control the gasification temperature of volatiles and the partial combustion/gasification temperature of fixed carbon so as to be in the above-described respective ranges, the present invention involves carrying out the gasification while controlling the feed rate of the gasifying agent in response to the height of the layer of organic waste fed to the furnace and supplying an appropriate amount of steam or nitrogen gas to a middle part of the organic waste layer in response to the internal temperature of the gasification furnace.

As used herein, the term "middle part" means a part in the vicinity of the boundary between the volatiles pyrolysis region where the pyrolysis of volatiles occurs predominantly and the fixed carbon partial combustion/gasification region where the partial combustion and gasification of fixed carbon proceeds predominantly.

In this invention, the feed rate of the gasifying agent is controlled in response to changes in the height of the organic waste layer so as to minimize fluctuations in the internal temperature of the gasification furnace. Moreover, if the internal temperature of the gasification furnace (i.e., the temperature in the vicinity of the surface of the organic waste layer) becomes high, the temperature of the gas obtained by the partial combustion and gasification of fixed carbon is reduced by supplying steam or nitrogen gas through a nozzle provided at a position corresponding to a middle part of the organic waste layer. Thus, the partial combustion and gasification of fixed carbon can be carried out at a high temperature of 1,000 to 1,500°C without affecting the appropriate pyrolysis temperature of volatiles which is in the range of 500 to 700°C. As a result, the reaction rate can be enhanced and the height of the organic waste layer can be reduced thereby. Furthermore, more CO than $CO_2$ is produced in the reaction of the above equation (1) and the equilibrium in equation (2) is shifted to the right side, resulting in the production of much CO and $H_2$ from fixed carbon. Thus, an organic waste-gasified gas containing large amounts of combustible components can be obtained.

That is, the internal temperature of the gasification furnace below the position of the nozzle can be kept substantially constant in spite of variation in the feed rate of organic waste. Consequently, the pyrolysis temperature of volatiles is also kept substantially constant, so that an organic waste-gasified gas containing large amounts of high-molecular hydrocarbon components and having stabilized properties can be produced.

The gasification furnace of the present invention is suitable for use as a gasification furnace in a process for producing carbon black by using organic waste as raw material. However, it is also suitable for use a fixed-bed gasification furnace for gasifying organic waste and coal to recover fuel oils and combustible gases.

BRIEF DESCRIPTION OF THE DRAWINGS

Fig. 1 is a schematic view illustrating an example of the fixed-bed gasification furnace of the present invention;

Fig. 2(a) and 2(b) are graphs showing the state of control of the gasifying agent and nitrogen feed rates in the example of the present invention (Example 1);

Fig. 3 is a schematic view illustrating an example of a fixed-bed gasification furnace related to, but not forming part of the present invention;

Fig. 4 is a schematic representation of an example of a conventional furnace for the gasification of organic waste; and

Fig. 5 is a graph schematically showing the relationship between the pyrolysis temperature of organic waste and the composition of the gas so produced.

DETAILED DESCRIPTION OF THE PREFERRED EMBODIMENTS

The present invention is more specifically explained with reference to the following example.

(Example 1)

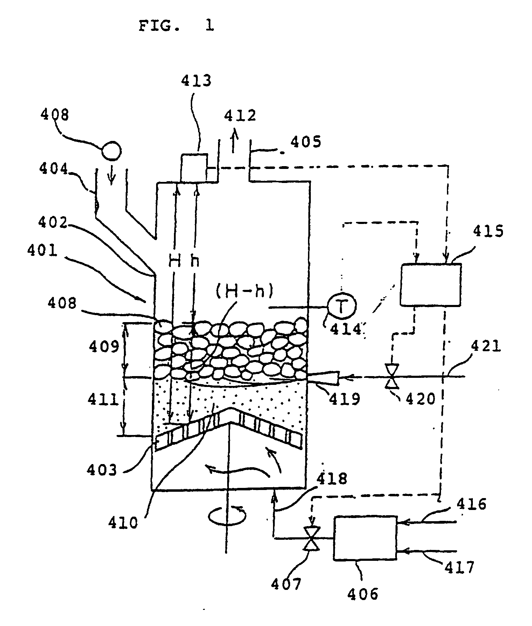

Fig. 1 is a schematic view illustrating an example of the fixed-bed gasification furnace of the present invention. This fixed-bed gasification furnace 401 has an organic waste charging chute 404 connected to the upper part of a cylindrical gasification furnace casing 402, an organic waste-gasified gas outlet 405 provided at the top thereof, and a perforated plate 403 disposed in the lower part thereof and functioning to hold the organic waste charged thereinto and supply a gasifying agent uniformly. To the bottom of gasification furnace casing 402 or its side wall below perforated plate 403 is connected a mixing vessel 406 by way of a pipeline and a valve 407. This mixing vessel 406 serves to prepare a gasifying agent 418 by mixing an oxygen-containing gas 416 and steam 417 supplied thereto. Moreover, a nozzle 419 for supplying steam or nitrogen gas to the organic waste layer is provided at a position corresponding to a middle part of the organic waste layer within gasification furnace casing 402. Perforated plate 403 has a gently sloping umbrella-like shape and is mounted rotatably.

This fixed-bed gasification furnace 401 is equipped with an ultrasonic level meter 413 serving as a means for measuring the height of the layer of organic waste fed to the furnace and also with a thermocouple 414 serving as a means for measuring the internal temperature of the gasification furnace. In addition, a controller 415 is installed which controls the degree of opening of valves 407 and 420 in response to signals from these ultrasonic level meter 413 and thermocouple 414. In Fig. 1, the degree of opening of valves 407 and 420 are controlled by the single controller 415. However, it is a matter of course that valves 407 and 420 may be controlled by two separate controllers.

Using this fixed-bed gasification furnace 401, scrap tires providing a typical example of organic waste were subjected to a gasification test.

As shown in Fig. 1, a gasifying agent 418 was prepared by introducing oxygen as an oxygen-containing gas 416 and steam 417 into a mixing vessel 406 and mixing them at a ratio of 1:1, and supplied to a space below the rotating perforated plate 403 at a feed rate regulated by means of valve 407.

Scrap tires (organic waste) 408, which had been cut into pieces, were fed through an organic waste charging chute 404, forming a scrap tire layer on perforated plate 403. In a volatiles pyrolysis region 409 corresponding to the upper part of the scrap tire layer, volatiles were pyrolyzed and gasified. The resulting residue 410 consisting largely of fixed carbon moved downward and was partially burned and gasified in a fixed carbon partial combustion/gasification region 411. Just above this fixed carbon partial combustion/gasification region 411, nitrogen 421 was supplied through nozzle 419 at a feed rate regulated by means of a valve 420 so that the temperature of volatiles pyrolysis region 409 would be in the range of 500 to 700°C. The gas obtained by the pyrolysis and gasification of volatiles and the gas obtained by the partial combustion and gasification of fixed carbon were mixed together and withdrawn through an organic waste-gasified gas outlet 405 as an organic waste-gasified gas 412.

During this process, the distance (h) between the top of gasification furnace casing 402 and the upper surface of the layer of scrap tires (organic waste) 408 was measured by means of ultrasonic level meter 413. By comparison with the distance (H) between the top of gasification furnace casing 402 and the upper surface of perforated plate 403, the height of the layer of scrap tires (organic waste) 408 was determined as (H-h). In response to the difference between this value and a preset value, controller 415 regulated the feed rate of the gasifying agent 418 by controlling the degree of opening of valve 407.

Moreover, the internal temperature (T) of the gasification furnace (i.e., the temperature above the volatiles pyrolysis region which is almost equal to the temperature of the organic waste-gasified gas) was measured by means of thermocouple 414. In response to the difference between this value and a preset value, controller 415 regulated the feed rate of nitrogen by controlling the degree of opening of valve 420.

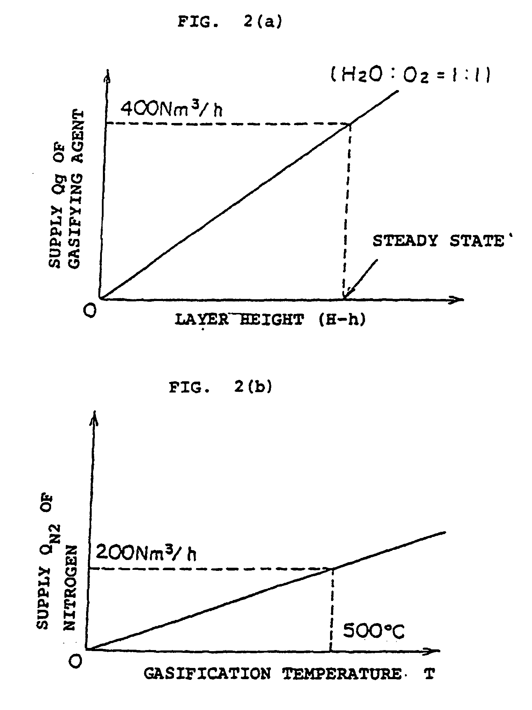

Scrap tires contain 60-70% by weight of volatiles (such as raw rubber and oil), 20-30 % by weight of fixed carbon, and 10-15 % by weight of inorganic components. In order to adjust the temperature of organic waste-gasified gas 412 (i.e., the temperature just above the organic waste layer) to 500°C, oxygen and steam forming a gasifying agent should be supplied in amounts as expressed by molar equivalent ratios ($O_2$/C and $H_2O$/C) of 0.4-0.5 based on the fixed carbon present in scrap tires, and nitrogen should be supplied in an amount as expressed by a molar ratio ($N_2$/C) of about 0.5 based on the fixed carbon present in scrap tires. In a gasification furnace having a capacity for treating scrap tires at a rate of 1 ton per hour, the feed rates of the gasifying agent and nitrogen are controlled as shown in Fig. 2.

Fig. 2(a) is a graph showing the relationship between the height (H-h) of the scrap tire layer and the gasifying agent feed rate controlled in response thereto. This graph indicates that the gasifying agent feed rate is 400 Nm$^3$/h in a steady state (i.e., when the layer height is equal to a preset value) and that the feed rate of oxygen is increased as the layer height becomes larger or decreased as the layer height becomes smaller, in response to a deviation from the preset value of the layer height.

Fig. 2(b) is a graph showing the relationship between the internal temperature (T) of the gasification furnace and the nitrogen feed rate controlled in response thereto. This graph indicates that the steam feed rate is 200 Nm$^3$/h when the temperature is equal to a preset value of 500°C and that the nitrogen feed rate is increased as the temperature becomes higher or decreased as the temperature becomes lower, in response to a deviation from the preset value of the temperature. An embodiment of a furnace concept related to, but not forming part of, the present invention is more specifically explained with reference to the following example.

(Example 2)

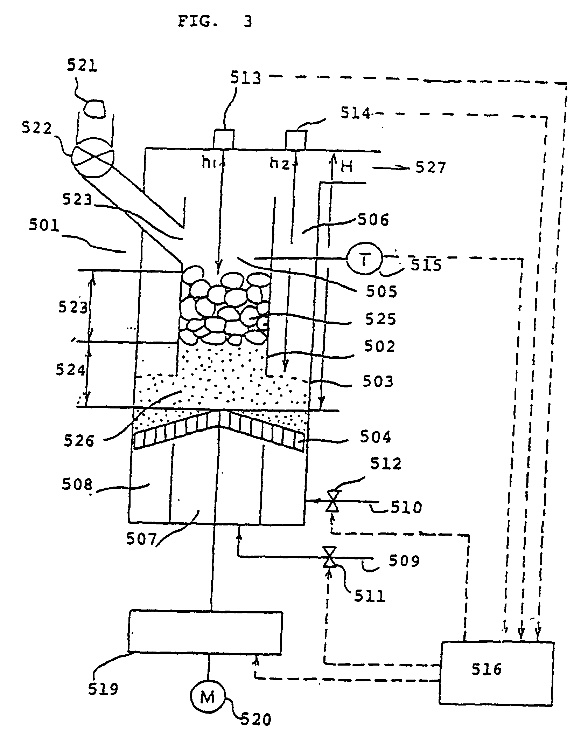

Fig. 3 is a schematic view illustrating an example of a fixed-bed gasification furnace related to, but not part of, the present invention. This fixed-bed gasification furnace 501 has a gently sloping rotatable conical perforated plate 504 and an inner casing 502 defining an A-compartment 505 above it, within an outer casing 503 constituting the outer wall of fixed-bed gasification furnace 501. Inner casing 502 and outer casing 503 are dimensioned so that the ratio of the cross-sectional area of inner casing 502 to the cross-sectional area of the space between inner casing 502 and outer casing 503 (i.e., B-compartment 506) is equal to about 1:1. Correspondingly to A-compartment 505 and B-compartment 506, the space below perforated plate 504 is also divided into an A1-compartment 507 and B1-compartment 508. Air 509 is supplied to A1-compartment 507 through a valve 511, while a gaseous mixture 510 of oxygen and steam is supplied to B1-compartment 508 through a valve 512.

This fixed-bed gasification furnace 501 is equipped with ultrasonic level meters 513 and 514 serving as means for measuring the height of the layer of organic waste 525 in A-compartment 505 and the height of the layer of residue 526 in B-compartment 506, respectively, and also with a thermocouple 515 serving as a means for measuring the internal temperature of A-compartment 505. In response to signals from these ultrasonic level meters 513, 514 and thermocouple 515, a controller 516 controls the degree of opening of valves 511 and 512, as well as a variable-speed drive 519 connected directly with a motor 520 for rotating perforated plate 504. In Fig. 3, the degrees of opening of valves 511, 512 and variable-speed drive 519 are controlled by the single controller 516. However, it is a matter of course that valves 511, 512 and variable-speed drive 519 may be controlled by separate controllers.

Using this fixed-bed gasification furnace 501, scrap tires (composed of 70% of volatiles and 30% of fixed carbon) providing a typical example of organic waste were subjected to a gasification test.

Scrap tires (organic waste) 521, which had been cut into pieces, were fed to A-compartment through a charging hole 523 by means of a feeder 522, forming a scrap tire layer on perforated plate 504. In a volatiles pyrolysis region 523 corresponding to the upper part of the scrap tire layer, volatiles were pyrolyzed and gasified. The resulting residue 523 consisting largely of fixed carbon moved downward and a portion thereof was partially burned and gasified in a fixed carbon partial combustion region 524 with air 509 supplied from A1-compartment 507. The remainder moved to B-compartment 506 with the rotation of perforated plate 504 and was partially burned and gasified with the gaseous mixture 510 of oxygen and steam supplied as a gasifying agent from B1-compartment 508. The gas obtained by the pyrolysis and gasification of volatiles and the gas obtained by the partial combustion and gasification of fixed carbon were mixed together and withdrawn from the gasification furnace as an organic waste-gasified gas 527.

During this process, the internal temperature (T) of A-compartment 505 (i.e., the temperature just above the organic waste layer which is almost equal to the temperature of the organic waste-gasified gas) was measured by means of thermocouple 515. In response to the difference between the measured value and a preset value (e.g., 500°C), controller 516 regulated the amount of air 509 supplied to A1-compartment 507 by controlling valve 511.

Moreover, the distance (h1) between the top of gasification furnace 501 and the upper surface of the layer of scrap tires (organic waste) 525 in A-compartment 505 was measured by means of ultrasonic level meter 513. By comparison with the distance (H) between the top of gasification furnace 501 and the upper surface of perforated plate 504, the height of the layer of scrap tires (organic waste) 525 was determined as (H-h1). In response to the difference between this value and a preset value, controller 516 regulated the amount of gaseous mixture 510 supplied to Bl-compartment 508 by controlling valve 512.

Furthermore, the distance (h2) between the top of gasification furnace 501 and the upper surface of the layer of residue 526 in B-compartment 506 was measured by means of ultrasonic level meter 514. By comparison with the distance (H) between the top of gasification furnace 501 and the upper surface of perforated plate 504, the height of the layer of residue 526 was determined as (H-h2). In response to the difference between this value and a preset value, controller 516 regulated the rotational speed of perforated plate 504 by means of a mechanical variable-speed drive 519. Thus, the rate of movement of residue 526 from A-compartment 505 to B-compartment 506 could be regulated.

**Claims**

1. Fixed-bed gasification furnace (401) wherein organic waste charged thereinto is gasified with a supply of a gasifying agent comprising a mixture of an oxygen-containing gas and steam, said furnace comprising

   means (413) for measuring the height of a layer of the charged organic waste in said furnace (401),

   means (414) for measuring the internal temperature of said furnace,

   a nozzle (419) for supplying steam or nitrogen gas to a middle part of the organic waste layer,

   a controller (415) for controlling the feed rate of the gasifying agent in response to a signal from the means (413) for measuring the height of the organic waste layer, and

   a controller (415) for controlling the feed rate of steam or nitrogen gas from the nozzle in response to a signal from the means (414) for measuring the internal temperature of the furnace (401).

2. Method for gasifying organic waste by charging the organic waste into a fixed-bed gasification furnace and gasifying the organic waste with supply of a gasifying agent comprising a mixture of an oxygen-containing gas and steam, the method comprising the steps of:

   supplying either steam or nitrogen gas to a middle part of a layer of fed organic waste in said furnace;

   controlling a feed rate of the gasifying agent in response to the height of the organic waste layer; and

   controlling the feed rate of steam or nitrogen gas supplied to a middle part of the organic waste layer in response to the internal temperature of the furnace, so as to carry out the gasification of the organic waste.

**Patentansprüche**

1. Festbettvergasungsofen (401), in dem in ihn gefüllter organischer Abfall durch Zufuhr eines Vergasungsmittels enthaltend eine Mischung eines sauerstoffhaltigen Gases und Dampf vergast wird, wobei der Ofen umfasst

   Mittel (413) zum Messen der Höhe einer Schicht des hineingefüllten organischen Abfalls in dem Ofen (401),

   Mittel (414) zum Messen der Innentemperatur des Ofens,

   eine Düse (419) zum Zuführen von Dampf oder gasförmigem Stickstoff in einen mittleren Teil der organischen Abfallschicht,

   eine Steuerung (415) zum Steuern der Zufuhrrate des Vergasungsmittels in Abhängigkeit eines Signals der Mittel (413) zum Messen der Höhe der organischen Abfallschicht, und

   eine Steuerung (415) zum Steuern der Zuführrate von Dampf oder gasförmigem Stickstoff aus der Düse in Abhängigkeit eines Signals von den Mitteln (414) zum Messen der Innentemperatur des Ofens (401).

2. Verfahren zum Vergasen organischen Abfalls durch Füllen des organischen Abfalls in einen Festbettvergasungsofen und Vergasen des organischen Abfalls durch Zufuhr eines Vergasungsmittels enthaltend eine Mischung aus einem sauerstoffhaltigen Gas und Dampf, wobei das Verfahren die Schritte aufweist:

   Zuführen von Dampf oder gasförmigem Stickstoff in einen mittleren Teil einer Schicht aus dem Ofen zugeführten organischen Abfalls,

   Steuern einer Zufuhrrate des Vergasungsmittels in Abhängigkeit der Höhe der organischen Abfallschicht, und

   Steuern der Zufuhrrate von einem mittleren Teil der organischen Abfallschicht zugeführtem Dampf oder gasförmigem Stickstoff in Abhängigkeit der Innentemperatur des Ofens, um die Vergasung des organischen Abfalls durchzuführen.

**Revendications**

1. Four (401) de gazéification à lit fixe dans lequel des déchets organiques qui y sont chargés sont gazéifiés au moyen d'une délivrance d'un agent de gazéification comprenant un mélange d'un gaz contenant de l'oxygène et de vapeur, ledit four comprenant

   un moyen (413) destiné à mesurer la hauteur d'une couche de déchets organiques chargés dans ledit four (401),

   un moyen (414) destiné à mesurer la température intérieure dudit four,

   une buse (419) destinée à délivrer de la vapeur ou de l'azote gazeux à une partie médiane de la couche de déchets organiques,

   un dispositif de commande (415) destiné à commander le débit d'alimentation de l'agent de gazéification en réponse à un signal délivré par le moyen (413) destiné à mesurer la hauteur d'une couche de déchets organiques, et

   un dispositif de commande (415) destiné à commander le débit d'alimentation par la buse de la vapeur ou de l'azote gazeux en réponse à un signal délivré par le moyen (414) destiné à mesurer la température intérieure du four (401).

2. Procédé de gazéification de déchets organiques par chargement des déchets organiques dans un four de gazéification à lit fixe et gazéification des déchets organiques par délivrance d'un agent de gazéification comprenant un mélange d'un gaz contenant de l'oxygène et de vapeur, le procédé comprenant les étapes consistant à :

   délivrer soit de la vapeur, soit de l'azote gazeux à une partie médiane d'une couche de déchets organiques chargée dans ledit four ;
   commander un débit d'alimentation de l'agent de gazéification en réponse à la hauteur de la couche de déchets organiques ; et
   commander le débit d'alimentation de la vapeur ou de l'azote gazeux délivrés à une partie médiane de la couche de déchets organiques en réponse à la température intérieure du four, de manière à exécuter la gazéification des déchets organiques.

FIG. 1

FIG. 2(a)

FIG. 2(b)

FIG. 3

FIG. 4

201

210

206

207

204

205

212

211

FIG. 5

LOW-MOLECULAR HC GAS

HIGH-MOLECULAR HC GAS

COMPOSITION (%)

100

50

0

500    750    1000

PYROLYSIS TEMPERATURE (°C)